# FASCICULE DE BREVET EUROPEEN

(11) **EP 2 643 513 B1**
(45) Date de publication et mention de la délivrance du brevet: **18.01.2017**
(21) Numéro de dépôt: 11842876.2
(22) Date de dépôt: 16.11.2011
(51) Int. Cl.: D06M 11/44, D06M 11/45, D06M 15/233, D06M 15/248, D06M 15/263, D06M 15/31, D06M 15/333, D06M 15/423, D06M 15/41, C09D 5/18, C09K 21/02, C03C 25/10, C08K 3/00

(54) **COMPOSITION IGNIFUGE AQUEUSE POUR MAT A BASE DE FIBRES MINERALES, ET MATS OBTENUS**
WÄSSRIGE FLAMMHEMMENDE ZUSAMMENSETZUNG FÜR EINE MATTE AUS MINERALFASERN, UND RESULTIERENDE MATTEN
AQUEOUS FIRE-RETARDANT COMPOSITION FOR A MAT MADE FROM MINERAL FIBRES, AND RESULTING MATS

(30) Priorité: 26.11.2010 FR 1059781
(43) Date de publication de la demande: 02.10.2013
(73) Titulaire: Saint-Gobain Adfors, 73000 Chambéry (FR)
(72) Inventeur: OMBE WANDJI, Nadège, F-94700 Maisons Alfort (FR)
(74) Mandataire: Saint-Gobain Recherche
(86) Numéro de dépôt international: PCT/FR2011/052658
(87) Numéro de publication internationale: WO 2012/069735

(56) Documents cités:
- US-A1- 2009 238 957
- US-B2- 7 608 550
- US-B2- 7 829 619

## Description

La présente invention se rapporte au domaine des mats à base de fibres minérales dotés de propriétés retardatrices de flammes.

Elle concerne plus particulièrement une composition ignifuge aqueuse qui contient une résine thermoplastique ou thermodurcissable et des agents retardateurs de flamme spécifiques, et les mats ainsi obtenus.

Les mats à base de fibres minérales non tissées (aussi appelés « intissés », « non tissés » ou « voiles ») sont bien connus et utilisés dans de nombreuses applications, notamment en tant que revêtement de surface de matériaux divers, en particulier de produits d'isolation thermique et/ou acoustique à base de laine minérale.

De tels mats peuvent être fabriqués selon les procédés conventionnels opérant par voie sèche ou par voie humide.

Dans le procédé par voie sèche, de la matière minérale fondue contenue dans un four est acheminée vers un ensemble de filières à partir desquelles des filaments s'écoulent par gravité et sont étirés par un fluide gazeux. Les filaments minéraux sont récoltés sur un convoyeur où ils s'entremêlent en formant un mat.

Sur la face supérieure du mat ainsi formé, on applique une composition aqueuse de liant à l'aide d'un dispositif adapté, le plus souvent opérant par dépôt par rideau, et on élimine l'excès de liant par aspiration au niveau de la face opposée. Le mat entre ensuite dans un dispositif contenant de l'air chaud dont la température (de l'ordre de 180 à 260°C) et la durée (au plus égale à 5 minutes) permettent l'élimination de l'eau et la réticulation du liant, puis le mat de fibres minérales est collecté sous la forme d'un enroulement.

Dans le procédé par voie humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions que celles décrites pour le procédé par voie sèche.

Dans les procédés précités, la composition de liant a pour fonction de lier les fibres minérales entre-elles et de conférer au mat qui les contient des propriétés mécaniques adaptées à l'usage désiré, notamment une rigidité suffisante pour pouvoir être manipulé facilement sans risque notamment qu'il puisse être déchiré.

La composition de liant à appliquer sur les fibres minérales se présente généralement sous la forme d'une émulsion ou d'une dispersion aqueuse renfermant au moins une résine thermoplastique et/ou thermodurcissable et des additifs tels qu'un catalyseur de réticulation de la résine, un silane promoteur d'adhérence, un hydrofugeant, ...

Les résines thermoplastiques les plus couramment utilisées sont des résines à base de polyacétate de vinyle, styrène-butadiène (SBR) et de polymères acryliques. Les résines thermodurcissables sont quant à elles des résines à base de formaldéhyde, notamment des phénoliques appartenant à la famille des résols, des résines urée-formaldéhyde et des résines mélamine-formaldéhyde.

Un inconvénient de ces résines réside dans leur aptitude à se consumer facilement en cas de feu lorsque les mats à base de fibres minérales sont exposés directement aux flammes.

Un moyen bien connu pour améliorer la résistance au feu des mats précités consiste à y inclure des agents ignifuges tels que des composés halogénés, notamment à base de brome ou de chlore, ou des composés phosphorés. Il est également connu d'utiliser les hydroxydes métalliques qui ont l'avantage d'être moins coûteux que les agents ignifuges précédents.

Ainsi, dans US 2005/0208852, il est décrit un mat fibreux pour membrane bitumée de toiture dont les fibres sont liées par une composition ignifuge qui contient un liant polymérique et un hydroxyde d'aluminium.

Dans EP 2 053 083 A1, il est proposé une composition ignifuge pour mat fibreux qui contient au moins un liant organique et au moins une charge, de préférence choisie dans le groupe de composés suivants : carbonate de calcium, mica, argile, trihydroxyde d'aluminium et talc.

Dans US 7 608 550, il est décrit un mat fibreux destiné au revêtement de panneaux de conduit de ventilation ou de panneaux isolants acoustiques et/ou thermiques à base de laine minérale. Le mat fibreux est à base de fibres de verre liées par une composition contenant un liant organique et en tant qu'agents ignifuges, un hydroxyde métallique et du noir de carbone. L'hydroxyde métallique préféré est l'hydroxyde de magnésium ou le trihydroxyde d'aluminium.

US7829619 décrit la production de cristaux d'AIOOH pour des applications de charges ayant des propriétés de retardateur de flamme dans le domaine des plastiques

US2009238957 décrit des revêtements pour câbles comprenant une charge (mélange d'AIOOH et d'hydroxyde de magnésium), un retardateur de flamme et un polymère d'éthylène-acétate de vinyle.

La présente invention vise à proposer une composition ignifuge aqueuse qui confère des propriétés de résistance au feu améliorées aux mats à base de fibres de verre sur lesquels elle est appliquée.

La composition ignifuge aqueuse selon la présente invention est caractérisée en ce qu'elle comprend :
- au moins une résine thermoplastique ou thermodurcissable,
- de l'hydroxyde de magnésium Mg(OH)₂ et de l'oxyde hydroxyde d'aluminium AIOOH en tant qu'agents retardateurs de flamme, et
- éventuellement du noir de carbone.

La résine thermoplastique ou thermodurcissable conforme à la présente invention peut être une résine styrène-butadiène (SBR), éthylène-chlorure de vinyle, polychlorure de vinylidène, modifié ou non, polyalcool vinylique, éthylène-acétate de vinyle (EVA), polyacétate de vinyle, acrylate d'éthyle-méthacrylate de méthyle, acrylique non carboxylé-acrylonitrile, acrylate de butyle carboxylé, polychlorure de vinylidène-acide acrylique, méthacrylate de méthyle-styrène, acide acrylique-styrène, polyacide acrylique, une résine urée-formaldéhyde, mélamine-formaldéhyde ou phénol-formaldéhyde. On préfère les résines acryliques, les résines urée-formaldéhyde et les mélanges de ces résines.

La quantité pondérale de résine dans la composition ignifuge aqueuse représente 20 à 95 % du poids total de la résine thermodurcissable, de Mg(OH)₂ et d'AlOOH, et de préférence 40 à 95 %.

L'association des agents retardateurs de flamme Mg(OH)₂ et AlOOH procure un effet de synergie qui se traduit par de meilleures propriétés de résistance au feu.

Dans la composition ignifuge aqueuse, la quantité pondérale de Mg(OH)₂ et d'AIOOH représente 5 à 80 % du poids total de la résine thermodurcissable, de Mg(OH)₂ et d'AlOOH, et de préférence 5 à 60 %.

La proportion pondérale Mg(OH)₂ : AIOOH varie généralement de 0,3 : 0,7 à 0,7 : 0,3, de préférence de 0,4 : 0,6 à 0,7 : 0,3 et avantageusement est égale à 0,5 : 0,5.

La composition ignifuge aqueuse peut comprendre en outre au moins une charge minérale, par exemple du carbonate de calcium, une argile, du talc et du mica. Le carbonate de calcium est préféré car il a été observé qu'il contribue à améliorer les propriétés de résistance au feu.

La quantité de charges dans la composition ignifuge aqueuse peut représenter jusqu'à 30 % du poids total de la résine thermodurcissable, de Mg(OH)₂ et d'AlOOH, de préférence jusqu'à 25 % et avantageusement jusqu'à 22 %.

Comme cela a déjà été mentionné, la composition ignifuge aqueuse peut comprendre du noir de carbone, ce qui permet de réaliser des mats ignifuges à base de fibres minérales qui sont colorés.

Dans ce cas, la quantité de noir de carbone représente 10 à 30 % du poids total de la résine thermodurcissable, de Mg(OH)₂ et d'AlOOH, de préférence 15 à 30 % et avantageusement 20 à 28 %.

La composition ignifuge aqueuse conforme à l'invention peut comprendre en outre les additifs conventionnels suivants : des pigments organiques et/ou inorganiques, des tensio-actifs, des agents modifiant la rhéologie, des agents anti-mousse, des biocides, des stabilisants, en particulier des agents retardant l'oxydation thermique, des épaississants et des agents hydrofuges.

La quantité totale des additifs précités n'excède pas 5 % du poids total de la résine thermodurcissable, de Mg(OH)₂ et d'AlOOH, de préférence 2 %.

La composition ignifuge aqueuse conforme à la présente invention est destinée à être appliquée sur des mats de fibres non tissées comprenant des fibres minérales, lesquels mats constituent un autre objet de la présente invention.

Selon un premier mode de réalisation, préféré, on dépose la composition ignifuge aqueuse sur le mat à base de fibres minérales (formé par la voie sèche ou la voie humide), puis le mat est traité à une température permettant la réticulation de la résine thermodurcissable qui devient alors infusible. La réticulation est effectuée à une température qui varie généralement de 150 à 260°C, de préférence de 180 à 220°C, et pendant une durée au plus égale à 3 minutes, de préférence qui varie de 10 secondes à 1 minute, et avantageusement de 15 à 30 secondes. Le mat est ensuite collecté sous la forme d'un enroulement.

Selon un deuxième mode de réalisation, on dépose la composition ignifuge aqueuse sur le mat à base de fibres minérales liées par la composition de liant, dans une étape supplémentaire après la collecte du mat.

L'application de la composition ignifuge aqueuse se fait sur le mat déroulé, dans les mêmes conditions d'application que la composition du liant décrites dans le premier mode de réalisation. L'excès de composition ignifuge aqueuse est éliminé par aspiration, le mat est ensuite soumis à un traitement thermique dans des conditions identiques à celles exposées précédemment pour le premier mode de réalisation, puis il est collecté à nouveau sous la forme d'un enroulement.

Les fibres minérales sont des fibres de verre, par exemple de verre E, C, R ou AR (alcali-résistant), de basalte ou de wollastonite (CaSiO₃), de préférence des fibres de verre. On préfère les fibres de verre, avantageusement de verre E.

Les fibres minérales se présentent généralement sous la forme de filaments.

Le mat de fibres minérales est composé de filaments minéraux discontinus de longueur pouvant atteindre 150 mm, de préférence variant de 20 et 100 mm et avantageusement de 50 à 70 mm, et ayant un diamètre qui peut varier dans une large mesure, par exemple de 5 à 30 µm.

S'agissant de fibres de verre, celles-ci peuvent également se présenter sous la forme de fils composés d'une multitude de filaments qui sont liés ensemble par un ensimage (ou fils de base), ou sous la forme d'assemblages de tels fils en stratifils (« rovings » en anglais).

Les fils précités peuvent être des fils sans torsion ou des fils retordus (ou fils textiles), de préférence sans torsion.

Les fils de verre sont généralement coupés à une longueur pouvant aller jusqu'à 100 mm, de préférence variant de 6 à 30 mm, avantageusement de 8 à 20 mm et mieux encore de 10 à 18 mm. Le diamètre des filaments de verre constituant les fils peut varier dans une large mesure, par exemple 5 à 30 µm. De la même manière, de larges variations peuvent survenir dans la masse linéique du fil qui peut aller de 34 à 1500 tex.

Le mat de fibres minérales peut comprendre des fibres organiques synthétiques ou naturelles, de préférence synthétiques.

A titre d'exemples de fibres synthétiques, on peut citer les fibres à base d'une oléfine telle que le polyéthylène et le polypropylène, d'un polyester tel que le polytéréphtalate d'alkylène, notamment le polytéréphtalate d'éthylène, ou d'un polyamide (nylon). Les fibres en polyéthylène sont préférées.

A titre d'exemples de fibres naturelles, on peut citer les fibres végétales, notamment de coton, de noix de coco, de sisal, de chanvre ou de lin, et les fibres animales notamment la soie ou la laine.

Le mat peut, le cas échéant, être renforcé par des fibres continues qui sont généralement déposées sur le dispositif de convoyage du mat dans le sens d'avancement du mat et réparties sur tout ou partie de la largeur du mat. Ces fibres sont généralement déposées dans l'épaisseur du mat de fibres, notamment minérales, avant l'application de la composition de liant.

Les fibres de renforcement peuvent être des fibres minérales et/ou organiques de même nature chimique que les fibres précitées constituant le mat de fibres selon l'invention.

Les fibres de renforcement en verre sont préférées.

En règle générale, les fibres qui entrent dans la constitution du mat conforme à l'invention sont constituées à plus de 50 % en poids de fibres minérales, de préférence à plus de 75 % et avantageusement à 100 %. De manière particulièrement préférée, les fibres sont en verre.

Le mat à base de fibres minérales, présente généralement une masse surfacique qui varie de 10 à 1100 g/m², de préférence 30 à 350 g/m², avantageusement 35 à 75 g/m².

La composition ignifuge représente généralement 7 à 30 % du poids du mat de fibres minérales, de préférence 10 à 25 %, calculé sur la base des matières solides.

Le mat de fibres minérales ignifugé conforme à la présente invention peut être utilisé dans de nombreuses applications, par exemple en tant que revêtement, à peindre ou non, à appliquer sur les murs et/ou les plafonds, revêtement de surface ou de jointement de panneaux de plâtre ou de ciment, revêtement de surface de produits d'isolation thermique et/ou phonique tels qu'une laine minérale ou une mousse destinée plus particulièrement à l'isolation des toitures, membrane d'étanchéité de revêtement de toiture, notamment de bardeaux ou pour la réalisation de revêtement de sol, notamment une sous-couche acoustique.

De préférence, le mat ignifugé est destiné à être utilisé en tant que revêtement de surface de produits d'isolation à base de laine minérale.

Les exemples qui suivent permettent d'illustrer l'invention sans toutefois la limiter.

Dans ces exemples, sur le mat ignifugé on mesure :
- la distance de propagation de la flamme, exprimée en mm, selon la norme ISO 11925-2 (classe B),
- le pouvoir calorifique supérieur (PCS) selon la norme ISO 1716, exprimé en MJ/kg de mat. Le pouvoir calorifique supérieur correspond au dégagement maximal théorique de la chaleur lors de la combustion,
- la présence de résidus après exposition aux températures élevées. On soumet le mat ignifugé au test de ternissement (« fogging test » en anglais) suivant : on dépose un échantillon (75 mm x 75 mm) sur une plaque chauffante, on dispose un tube cylindrique en aluminium autour de l'échantillon et on place une plaque de verre alcali-résistant au sommet du tube. L'échantillon est chauffé à 220°C pendant 150 heures.

La plaque de verre refroidie est examinée visuellement afin de détecter la présence de dépôts de condensation qui se traduisent par un ternissement du verre. L'évaluation se fait selon une échelle qui va de V1 (aucun ternissement) à V4 (ternissement important).

Sur la plaque, on mesure aussi la transmittance du verre dans le visible (longueur d'onde 300 à 2500 nm) avant et après le test de ternissement. Les échantillons sont classés en fonction de l'écart (ΔT) des transmittances précitées de la manière suivante :

| ΔT | Classement |
|---|---|
| 0 - 0,003 | T1 |
| 0,003 - 0,010 | T2 |
| 0,010 - 0,015 | T3 |
| Supérieur à 0,015 | T4 |

Les échantillons classés V4 et/ou T4 ne sont pas acceptables.

### EXEMPLES 1 A 7

On prépare des compositions ignifuges aqueuses contenant les constituants figurant dans le tableau 1 dans des proportions exprimées en % en poids, et en parts pondérales entre parenthèses. Les différents constituants sont introduits dans un récipient contenant de l'eau à la température ambiante, sous agitation modérée jusqu'à l'obtention d'une dispersion uniforme.

La teneur en matières solides (extrait sec) des compositions ignifuges est égale à 13 %.

On fabrique un mat de fibres de verre E par le procédé opérant par voie humide selon le premier mode de réalisation de l'invention, dans lequel la composition ignifuge aqueuse est appliquée par dépôt sur le mat de fibres non liées. L'excès de liant est aspiré et le mat est placé dans une étuve à 210°C pendant 1 minute.

Le mat obtenu possède une masse surfacique égale à 60 g/m² et contient 20 % en poids de liant infusible.

La distance de propagation de la flamme et l'aspect de la flamme sont donnés dans le tableau 1.

La distance de propagation de la flamme de l'exemple 1 contenant une résine urée-formaldéhyde est réduite par rapport aux exemples 3 et 4, démontrant ainsi un effet de synergie en présence du mélange de Mg(OH)₂ et d'AlOOH.

Une teneur plus élevée en Mg(OH)₂ et d'AIOOH (exemple 2) permet de diviser la distance de propagation de la flamme par 4.

La distance de propagation de la flamme du mat de l'exemple 5 contenant une résine acrylique est nettement plus faible que celui de l'exemple 7.

Le mat non coloré de l'exemple 6 présente également une diminution de la distance de propagation de la flamme par rapport à l'exemple 7.

### EXEMPLES 8 A 11

On prépare des compositions ignifuges aqueuses contenant les constituants figurant dans le tableau 2 dans des proportions exprimées en % en poids, et en parts pondérales entre parenthèses. Les compositions sont préparées dans les mêmes conditions qu'aux exemples 1 à 7.

On fabrique un mat de fibres de verre par le procédé opérant selon le deuxième mode de réalisation de l'invention.

Dans un premier temps, on fabrique un mat de fibres de verre E par le procédé opérant par voie humide : sur le mat formé, on applique une composition de liant contenant une résine urée-formaldéhyde, on élimine l'excès de ladite composition et on introduit le mat dans une étuve à 210°C pendant 1 minute.

Le mat obtenu contient 10 % en poids de résine urée-formaldéhyde réticulée et possède une masse surfacique égale à 45 g/m².

Dans un deuxième temps, on dépose par rideau la composition ignifuge aqueuse sur le mat de fibres liées, puis on l'introduit dans une étuve à 210°C pendant 1 minute.

Au final, le mat possède une masse surfacique égale à 60 g/m² et contient 12,5 % en poids de composition ignifuge infusible.

Les mesures des propriétés des mats obtenus figurent dans le tableau 2.

L'exemple 8 selon l'invention possède une meilleure résistance au feu que les exemples 9 et 10 : la distance de propagation de la flamme ainsi que le pouvoir calorifique supérieur sont réduits par rapport aux exemples 9 et 10. L'exemple 8 a un pouvoir calorifique supérieur plus faible que l'exemple 11 qui contient une quantité identique d'agent retardateur de flamme phosphoré.

**Tableau 1**

| | Ex. 1 | Ex. 2 | Ex. 3 (comp.) | Ex. 4 (comp.) | Ex. 5 | Ex. 6 | Ex. 7 (comp.) |
|---|---|---|---|---|---|---|---|
| **Composition iqnifuqe** | | | | | | | |
| - résine urée-formaldéhyde⁽¹⁾ | 68,8 (94,50) | 60,8 (83,50) | 68,8 (94,50) | 68,8 (94,50) | - | - | - |
| - résine acrylique⁽²⁾ | - | - | - | - | 60,8 (83,50) | 88,0 (88,0) | 72,8 (100,0) |
| - Mg(OH)₂ | 2 (2,75) | 6 (8,25) | 4 (5,50) | - | 6 (8,25) | 6 (6) | - |
| - AIOOH | 2 (2,75) | 6 (8,25) | - | 4 (5,50) | 6 (8,25) | 6 (6) | - |
| - noir de carbone | 27,2 (37,36) | 27,2 (37,36) | 27,2 (37,36) | 27,2 (37,36) | 27,2 (37,36) | - | 27,2 (37,36) |
| **Propriétés** | | | | | | | |
| - dist. propagation flamme (mm) | 120 | 30 | >150 | > 150 | 20 | 100 | 120 |
| - aspect de la flamme | fugace | fugace | fugace | persistante | fugace | fugace | fugace |
| - test de ternissement | | | | | | | |
| • évaluation visuelle | n. d. | n. d. | n. d. | V1/V2 | n. d. | n. d. | n. d. |
| • ΔT | n. d. | n. d. | n. d. | 0,0029 (T1) | n. d. | n. d. | n. d. |

| | | | | | | | |
|---|---|---|---|---|---|---|---|
| n. d. : non déterminé ⁽¹⁾ Commercialisée sous la référence Préféré^{®} 71400 J par la société DYNEA ⁽²⁾ Commercialisée sous la référence Acrodur^{®}950L par la société BASF | | | | | | | |

**Tableau 2**

| | Ex. 8 | Ex. 9 (comp.) | Ex. 10 (comp.) | Ex. 11 (comp.) |
|---|---|---|---|---|
| **Composition ignifuge** | | | | |
| - résine acrylique⁽²⁾ | 44,6(86,4) | 44,6(86,4) | 44,6 (86,4) | 44,6 (100) |
| - Mg(OH)₂ | 3,5 (6,8) | 7(13,6) | | |
| - AIOOH | 3,5 (6,8) | - | 7 (13,6) | |
| - composé phosphoré⁽³⁾ | - | - | | 7 (15,7) |
| - noir de carbone | 24,8(48,0) | 24,8(48,0) | 24,8 (48,0) | 24,8 (55,6) |
| - CaCO₃ | 23,6(41,0) | 23,6(41,0) | 23,6 (41,0) | 23,6 (52,9) |
| **Propriétés** | | | | |
| - dist. propagation flamme (mm) | 17 | 25 | 21 | 17 |
| - aspect de la flamme | fugace | fugace | fugace | fugace |
| - PCS | 2,7 | 4,6 | 4,5 | 3,2 |

| | | | | |
|---|---|---|---|---|
| ⁽¹⁾ Commercialisée sous la référence Acrodur^{®}950L par la société BASF ⁽³⁾ Commercialisé sous la référence Kappaflam^{®}P31 par la société KAPP CHIMIE | | | | |

## Revendications

1. Composition ignifuge aqueuse pour fibres minérales, notamment de verre ou de roche, **caractérisée en ce qu'**elle comprend
- au moins une résine thermoplastique ou thermodurcissable,
- de l'hydroxyde de magnésium Mg(OH)₂ et de l'oxyde hydroxyde d'aluminium AIOOH en tant qu'agents retardateurs de flamme, et
- éventuellement du noir de carbone.

2. Composition selon la revendication 1, **caractérisée en ce que** la résine thermoplastique ou thermodurcissable est une résine styrène-butadiène (SBR), éthylène-chlorure de vinyle, polychlorure de vinylidène, modifié ou non, polyalcool vinylique, éthylène-acétate de vinyle (EVA), polyacétate de vinyle, acrylate d'éthyle-méthacrylate de méthyle, acrylique non carboxylé-acrylonitrile, acrylate de butyle carboxylé, polychlorure de vinylidène-acide acrylique, méthacrylate de méthyle-styrène, acide acrylique-styrène, polyacide acrylique, une résine urée-formaldéhyde, mélamine-formaldéhyde ou phénol-formaldéhyde.

3. Composition selon la revendication 2, **caractérisée en ce que** la résine est une résine acrylique, une résine urée-formaldéhyde ou un mélange de ces résines.

4. Composition selon l'une des revendications 1 à 3, **caractérisée en ce que** la quantité pondérale de résine dans la composition ignifuge représente 20 à 95 % du poids total de la résine thermodurcissable, de Mg(OH)₂ et d'AIOOH et de préférence 40 à 95 %.

5. Composition selon l'une des revendications 1 à 4, **caractérisée en ce que** la quantité pondérale de Mg(OH)₂ et d'AIOOH représente 5 à 80 % du poids total de la résine thermodurcissable, de Mg(OH)₂ et d'AlOOH, et de préférence 5 à 60 %.

6. Composition selon l'une des revendications 1 à 5, **caractérisée en ce que** la proportion pondérale Mg(OH)₂ : AlOOH varie de 0,3 : 0,7 à 0,7 : 0,3, de préférence de 0,4 : 0,6 à 0,7 : 0,3 et avantageusement est égale à 0,5 : 0,5.

7. Composition selon l'une des revendications 1 à 6, **caractérisée en ce qu'**elle comprend en outre au moins une charge minérale telle que le carbonate de calcium, une argile, le talc et le mica, de préférence le carbonate de calcium.

8. Composition selon la revendication 7, **caractérisée en ce que** la quantité de charges peut représenter jusqu'à 30 % du poids total de la résine thermodurcissable, de Mg(OH)₂ et d'AlOOH, de préférence jusqu'à 25 % et avantageusement jusqu'à 22 %.

9. Composition selon l'une des revendications 1 à 8, **caractérisée en ce que** la quantité de noir de carbone représente 10 à 30 % du poids total de la résine thermodurcissable, de Mg(OH)₂ et d'AlOOH, de préférence 15 à 30 %, et avantageusement 20 à 28 %.

10. Mat à base de fibres minérales non tissées, **caractérisé en ce que** les fibres minérales sont traitées par une composition ignifuge aqueuse selon l'une des revendications 1 à 9.

11. Mat selon la revendication 10, **caractérisé en ce que** les fibres sont des fibres de verre ou de roche, notamment de basalte ou de wollastonite.

12. Mat selon la revendication 10 ou 11, **caractérisé en ce que** les fibres minérales sont sous la forme de filaments, de fils composés d'une multitude de filaments (fils de base) ou d'assemblages de ces fils de base en stratifils.

13. Mat selon l'une des revendications 10 à 12, **caractérisé en ce qu'**il comprend en outre des fibres organiques synthétiques ou naturelles, de préférence des fibres de polyéthylène.

14. Mat selon l'une des revendications 10 à 13, **caractérisé en ce qu'**il présente une masse surfacique qui varie de 10 à 1100 g/m², de préférence 30 à 350 g/m², avantageusement 35 à 75 g/m².

15. Mat selon l'une des revendications 10 à 14, **caractérisé en ce que** la composition ignifuge représente 7 à 30 % en poids du mat de fibres, notamment minérales, de préférence 10 à 25 %, calculé sur la base des matières solides.

16. Mat selon l'une des revendications 10 à 15, **caractérisé en ce que** les fibres sont en verre.

## Patentansprüche

1. Wässrige feuerfeste Zusammensetzung für mineralische Fasern, insbesondere aus Glas oder aus Stein, **dadurch gekennzeichnet, dass** sie Folgendes enthält:
- mindestens ein thermoplastisches oder duroplastisches Harz,
- Magnesiumhydroxid Mg(OH)₂ und Aluminiumhydroxidoxid AIOOH als Flammschutzmittel und
- gegebenenfalls Rußschwarz.

2. Zusammensetzung nach Anspruch 1, **dadurch gekennzeichnet, dass** das thermoplastische oder duroplastische Harz ein Butadien-Styrol-Harz (SBR), Ethylenvinylchlorid, Polyvinylidenchlorid, modifiziert oder nicht-modifiziert, Polyvinylalkohol, Ethylenvinylacetat (EVA), Polyvinylacetat, Ethylacrylat-Methylmethacrylat, nicht-carboxyliertes Acryl-Acrylnitril, carboxyliertes Butylacrylat, Vinylidenpolychlorid-Acrylsäure, Methylmethacrylatstyrol, Acrylsäure-Stytrol, Polyacrylsäure, ein Harnstoff-Formaldehyd-Harz, Melamin-Formaldehyd oder Phenol-Formaldehyd ist.

3. Zusammensetzung nach Anspruch 2, **dadurch gekennzeichnet, dass** das Harz ein Acrylharz, ein Harnstoff-Formaldehyd-Harz oder ein Gemisch aus diesen Harzen ist.

4. Zusammensetzung nach einem der Ansprüche 1 oder 3, **dadurch gekennzeichnet, dass** die Gewichtsmenge an Harz in der feuerfesten Zusammensetzung 20 bis 95 % des Gesamtgewichts des duroplastischen Harzes, von Mg(OH)₂ und von AIOOH, und bevorzugt 40 bis 95 % darstellt.

5. Zusammensetzung nach einem der Ansprüche 1 oder 4, **dadurch gekennzeichnet, dass** die Gewichtsmenge an Mg(OH)₂ und an AIOOH 5 bis 80 % des Gesamtgewichts des duroplastischen Harzes, von Mg(OH)₂ und von AIOOH, und bevorzugt 5 bis 60 % darstellt.

6. Zusammensetzung nach einem der Ansprüche 1 oder 5, **dadurch gekennzeichnet, dass** die Gewichtsmenge von Mg(OH)₂: AIOOH von 0,3:0,7 bis 0,7:0,3 und bevorzugt von 0,4:0,6 bis 0,7:0,3 und vorteilhafterweise gleich 0,5:0,5 ist.

7. Zusammensetzung nach einem der Ansprüche 1 oder 6, **dadurch gekennzeichnet, dass** sie ferner mindestens einen mineralischen Füllstoff wie Calciumcarbonat, einem Ton, Talk und Mica, bevorzugt Calciumcarbonat, enthält.

8. Zusammensetzung nach Anspruch 7, **dadurch gekennzeichnet, dass** die Menge an Füllstoffen bis 30 % des Gesamtgewichts des duroplastischen Harzes, von Mg(OH)₂ und von AIOOH, und bevorzugt bis 25 % und vorteilhafterweise bis 22 % darstellen kann.

9. Zusammensetzung nach einem der Ansprüche 1 oder 8, **dadurch gekennzeichnet, dass** die Menge an Rußschwarz 10 bis 30 % des Gesamtgewichts des duroplastischen Harzes, von Mg(OH)₂ und von AIOOH, und bevorzugt 15 bis 30 % und vorteilhafterweise 20 bis 28 % darstellt.

10. Matte aus mineralischen Vliesstofffasern, **dadurch gekennzeichnet, dass** die mineralischen Fasern mit einer wässrigen feuerfesten Zusammensetzung nach einem der Ansprüche 1 bis 9 behandelt sind.

11. Matte nach Anspruch 10, **dadurch gekennzeichnet, dass** die Fasern Fasern aus Glas oder Stein, insbesondere aus Basalt oder aus Wollastonit, sind.

12. Matte nach Anspruch 10 oder 11, **dadurch gekennzeichnet, dass** die mineralischen Fasern die Form von Filamenten, von aus einer Vielzahl von Filamenten (Basisfäden) bestehenden Fäden oder von Verbindungen dieser Basisfäden in Aufschichtungen haben.

13. Matte nach einem der Ansprüche 10 bis 12, **dadurch gekennzeichnet, dass** sie ferner synthetische oder natürliche organische Fasern, bevorzugt Polyethylen-Fasern, enthält.

14. Matte nach einem der Ansprüche 10 bis 13, **dadurch gekennzeichnet, dass** sie eine flächenbezogene Masse aufweist, die von 10 à 1100 g/m², bevorzugt 30 bis 350 g/m², bevorzugt 35 bis 75 g/m² variiert.

15. Matte nach einem der Ansprüche 10 bis 14, **dadurch gekennzeichnet, dass** die feuerfeste Zusammensetzung 7 bis 30 Gew.-% der Matte aus insbesondere mineralischen Fasern, bevorzugt 10 bis 25 %, berechnet auf der Basis der Feststoffe, aufweist.

16. Matte nach einem der Ansprüche 10 bis 15, **dadurch gekennzeichnet, dass** die Fasern aus Glas sind.

## Claims

1. An aqueous flame retardant composition for mineral fibers, in particular glass or rock fibers, **characterized in that** it comprises:
- at least one thermoplastic or thermoset resin;
- magnesium hydroxide, Mg(OH)₂, and aluminum hydroxide, AIOOH, as flame retarding agents; and
- optionally, carbon black.

2. The composition as claimed in claim 1, **characterized in that** the thermoplastic or thermoset resin is a styrene-butadiene (SBR), ethylene-vinyl chloride, polyvinylidene chloride, which may or may not be modified, polyvinyl alcohol, ethylene-vinyl acetate (EVA), polyvinyl acetate, ethyl acrylate-methyl methacrylate, non-carboxylic acrylic-acrylonitrile, carboxylic butyl acrylate, polyvinylidene chloride-acrylic acid, methyl methacrylate-styrene, acrylic acid-styrene, or polyacrylic acid resin, or a urea-formaldehyde, melamine-formaldehyde resin or phenol-formaldehyde resin.

3. The composition as claimed in claim 2, **characterized in that** the resin is an acrylic resin, a urea-formaldehyde resin or a mixture of said resins.

4. The composition as claimed in one of claims 1 to 3, **characterized in that** the quantity by weight of resin in the flame retardant composition represents 20% to 95% of the total weight of the thermoset resin, Mg(OH)₂ and AlOOH, preferably 40% to 95%.

5. The composition as claimed in one of claims 1 to 4, **characterized in that** the quantity by weight of Mg(OH)₂ and AlOOH represents 5% to 80% of the total weight of the thermoset resin, Mg(OH)₂ and AlOOH, preferably 5% to 60%.

6. The composition as claimed in one of claims 1 to 5, **characterized in that** the proportion by weight of Mg(OH)₂:AlOOH is in the range 0.3:0.7 to 0.7:0.3, preferably in the range 0.4:0.6 to 0.7:0.3, and advantageously equal to 0.5:0.5.

7. The composition as claimed in one of claims 1 to 6, **characterized in that** it further comprises at least one mineral filler such as calcium carbonate, a clay, talc or mica, preferably calcium carbonate.

8. The composition as claimed in claim 7, **characterized in that** the quantity of fillers may represent up to 30% of the total weight of the thermoset resin, Mg(OH)₂ and AIOOH, preferably up to 25% and advantageously up to 22%.

9. The composition as claimed in one of claims 1 to 8, **characterized in that** the quantity of carbon black represents 10% to 30% of the total weight of the thermoset resin, Mg(OH)₂ and AIOOH, preferably 15% to 30% and advantageously 20% to 28%.

10. A mat based on non-woven mineral fibers, **characterized in that** the mineral fibers are treated with an aqueous flame retardant composition as claimed in one of claims 1 to 9.

11. The mat as claimed in claim 10, **characterized in that** the fibers are fibers of glass or rock, in particular basalt or wollastonite.

12. The mat as claimed in claim 10 or claim 11, **characterized in that** the mineral fibers are in the form of filaments, threads composed of a multitude of filaments (base threads) or assemblies of said base threads into rovings.

13. The mat as claimed in one of claims 10 to 12, **characterized in that** it further comprises synthetic or natural organic fibers, preferably polyethylene fibers.

14. The mat as claimed in one of claims 10 to 13, **characterized in that** it has a mass per unit area in the range 10 to 1100 g/m², preferably in the range 30 to 350 g/m², advantageously in the range 35 to 75 g/m².

15. The mat as claimed in one of claims 10 to 14, **characterized in that** the flame retardant composition represents 7% to 30% of the weight of the mineral fiber mat, preferably 10% to 25%, calculated on the basis of the solid materials.

16. The mat as claimed in one of claims 10 to 15, **characterized in that** the fibers are formed from glass.
